# EUROPÄISCHE PATENTSCHRIFT

(11) **EP 0 601 563 B1**
(45) Veröffentlichungstag und Bekanntmachung des Hinweises auf die Patenterteilung: **09.10.1996**
(21) Anmeldenummer: 93119797.4
(22) Anmeldetag: 08.12.1993
(51) Int. Cl.: B23P 19/04

(54) **Federmontagewerkzeug**
Spring assembling tool
Outil pour le montage de ressorts

(30) Priorität: 09.12.1992 DE 4241399
(43) Veröffentlichungstag der Anmeldung: 15.06.1994
(73) Patentinhaber: Haschkamp, Ernestine, D-96364 Marktrodach (DE); Haschkamp, Joachim, Dipl.-Ing., D-96364 Marktrodach (DE); Haschkamp, Wolfgang, Dipl.-Kfm., D-96364 Marktrodach (DE)
(72) Erfinder: Rohm, Ingo, D-07356 Eliasbrunn (DE)
(74) Vertreter: Koch, Günther, Dipl.-Ing.

(56) Entgegenhaltungen:
- DD-A- 278 971
- PATENT ABSTRACTS OF JAPAN vol. 10, no. 277 (M-519) (2333) 19. September 1986 & JP-A-61 100 328 (SHARP CORP) 19. Mai 1986
- PATENT ABSTRACTS OF JAPAN vol. 12, no. 352 (M-744) (3199) 21. September 1988 & JP-A-63 109 922 (TOSHIBA CORP) 14. Mai 1988
- PATENT ABSTRACTS OF JAPAN vol. 11, no. 318 (M-632) (2765) 16. Oktober 1987 & JP-A-62 102 932 (TOSHIBA CORP) 13. Mai 1987
- PATENT ABSTRACTS OF JAPAN vol. 9, no. 51 (M-361) 6. März 1985 & JP-A-59 187 428 (SANYO DENKI KK) 24. Oktober 1984

## Beschreibung

Die Erfindung bezieht sich auf ein Montagewerkzeug gemäß Oberbegriff von Patentanspruch 1 zum Einsatz von vorgespannten Druckschraubenfedern in das ihnen zugeordnete Federlager, insbesondere zur Anwendung für Tastenschalter in der Elektroindustrie oder in der Feinwerktechnik, welches einen Führungskanal und einen darin verschieblichen Druckstempel aufweist und bei dem der Druckstempel die im Führungskanal befindliche, zusammengedrückte Feder in das Federlager herausschiebt.

Ein solches Montagewerkzeug ist aus der DD-278 971 A1 bekannt. Hierbei wird die Druckschraubenfeder in einem Spannkanal auf ihr Montagemaß zusammengedrückt, wobei die Druckfeder auf einem Führungsstift sitzt. Das Einschieben in den Einbauraum erfolgt über einen Schwinghebel.

Die DE-40 27 903 A1 betrifft eine Vorrichtung zur Montage von Schaltfedern in Geräte, wobei ein eigener Druckkolben vorgesehen ist, um in einer ersten Station die Federn mechanisch zu spannen. Anschließend werden die Federn in gespanntem Zustand von einem Montagewerkzeug übernommen und einer zweiten Station zugeführt, die eine Aufnahmeeinheit für das Gerät hat. Dort werden sie lagegerecht in das Gerät eingesetzt.

Die DE-34 12 428 A1 zeigt eine Montagevorrichtung für Axialsicherungen, die einen schräg zu einer Bohrung mündenden Zuführkanal aufweist, durch den die Axialsicherung in einen Montagekopf gefördert wird, wobei ein sich in Montagerichtung bewegender Montageschieber vorgesehen ist, durch den die im Montagekopf befindliche Axialsicherung auf einen Bolzen geschoben wird.

Die JP-59-187 428 (A) (Patents Abstracts of Japan Sect. M, Vol. 9 (1985), Nr. 51 (M-361)) zeigt ein Werkzeug, mit dem Druckschraubenfedern auf Federlagerzapfen aufgesetzt werden, wobei die Druckfedern durch einen gegenüber einem festen Backen beweglichen Backen gespannt werden.

Die JP-60-48 226 (A) (Patents Abstracts of Japan, Sect. M., Vol 9 (1985), Nr. 179 (M-399)) zeigt ein Werkzeug zur Montage von Zugschraubenfedern.

Trotz der bekannten Montagevorrichtungen erfolgt das Einsetzen kleiner Druckschraubenfedern in ihre Federlager z.Zt. überwiegend durch Hand unter Benutzung von Pinzetten oder anderen Werkzeugen. Dies ist ein sehr zeit- und arbeitsaufwendiges Verfahren, welches ein handwerkliches Geschick erfordert, weil die Federn infolge ihrer Vorspannung leicht abspringen können.

Der Erfindung liegt daher die Aufgabe zugrunde, ein einfach aufgebautes Federmontagewerkzeug zu schaffen, mit dem das Spannen und Einsetzen der Druckschraubenfedern in die Federkammer zuverlässig vorgenommen werden kann.

Gelöst wird die gestellte Aufgabe durch die im Patentanspruch 1 angegebenen Merkmale.

Das Montagewerkzeug kann entweder am Galgen hängend handgeführt benutzt oder in einen Montageautomaten eingesetzt werden. Gegenüber einer Handmontage wird durch das erfindungsgemäße Montagewerkzeug eine Zeiteinsparung von wenigstens 50% - 60% erreicht. Bei Einsatz in einem Automaten kann eine Zeiteinsparung von ca. 100% erreicht werden. Selbst bei Benutzung des handgeführten Werkzeugs ist keine besondere Sachkenntnis für die Bedienung erforderlich.

Die Zuführung der vereinzelten Druckschraubenfedern erfolgt zweckmäßigerweise durch Druckluft über einen der Größe der Feder entsprechend dimensionierten Schlauch. Das Zusammendrücken und Ausstoßen der zusammengedrückten Feder erfolgt zweckmäßigerweise ebenfalls über Druckluft, wobei die Auslösung der Steuerung für das Montagewerkzeug elektrisch über einen Hand- oder Fußtaster erfolgt. Dabei beträgt die Zeitspanne vom Betätigen des Tasters (Feder spannen und ausschieben) bis zur erneuten Startbereitschaft ca. 0,9 Sekunden. In dieser Zeit erfolgt die Vereinzelung und Zuführung der nächsten Feder.

Weitere zweckmäßige Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:

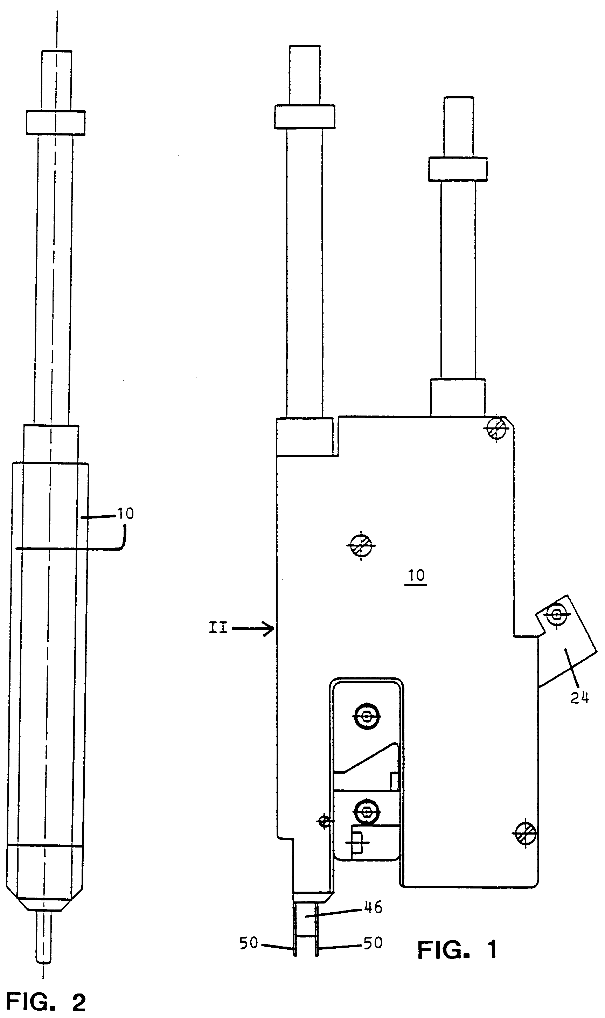

- Fig. 1: eine Vorderansicht des Federmontagewerkzeuges,
- Fig. 2: eine Ansicht des Werkzeuges in Richtung des Pfeiles II gemäß Fig. 1 betrachtet,
- Fig. 3: eine der Fig. 1 entsprechende Ansicht mit abgenommenem Abdeckblech,
- Fig. 4: als Einzelteil die Abdeckung des Auswerferschiebers.

Das flache Gehäuse des Federmontagewerkzeuges besteht aus mehreren weiter unten beschriebenen Einzelteilen, die auf beiden Seiten durch eine Abdeckung 10 geschlossen sind. Ein erster Gehäuseteil 12 in Gestalt eines Winkelstücks weist einen Anschluß für einen ersten pneumatischen Zylinder 14 auf. Ein Grundkörper 16 ist benachbart zu dem in Längsrichtung verlaufenden Schenkel des Winkelstücks 12 angeordnet und weist einen Anschluß für einen zweiten pneumatischen Zylinder 18 auf. Weiterhin ist am Grundkörper 16 das Schieberlager 20 angeordnet. Das Schieberlager lagert vertikal verschiebbar zwei Schieberplatten 26, die über ein Zwischenstück 28 mit einer Kolbenstange 30 in Verbindung stehen, die über den ersten Pneumatikzylinder 14 betätigt wird. Im Schieberlager ist eine Querbohrung 32 angeordnet, in der ein Druckbolzen 34 verschiebbar ist. Dieser Druckbolzen trägt seitlich vorstehend einen Lagerbolzen 36, der in zwei schräg in den Schieberplatten 26 angeordneten Schlitzen 38 läuft. Dies bewirkt, daß beim Niederfahren der Schieberplatten unter der Wirkung des Pneumatikdruckes im Zylinder 14 der Druckbolzen 34 in der Bohrung 32 nach links verschoben wird.

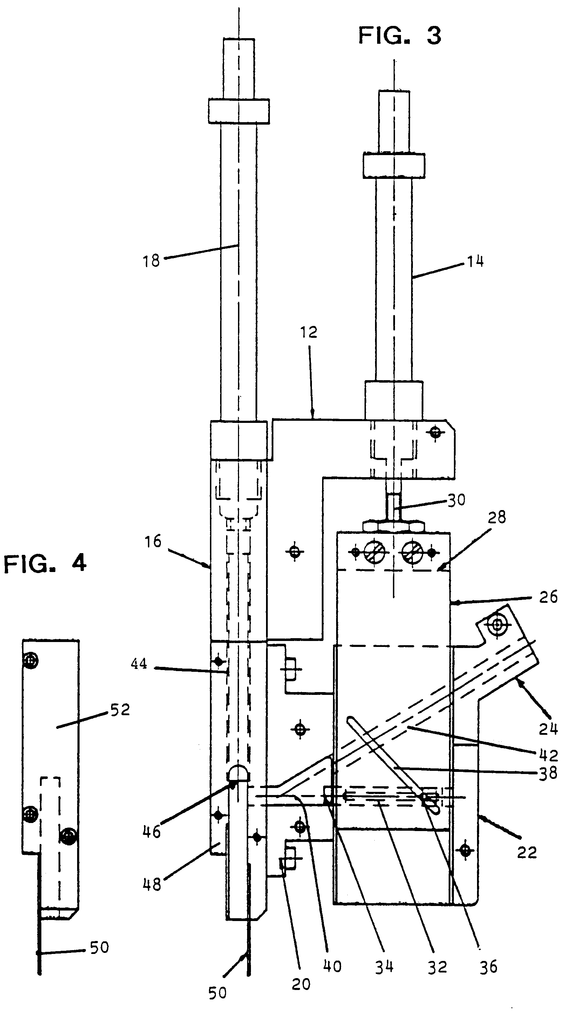

Der linke Teil der Querbohrung 32 bildet eine Federkammer 40, in die schräg von oben her ein Zuführungskanal 42 für die Druckschraubenfedern einmündet, die dem Anschlußstück 24 pneumatisch über einen nicht dargestellten Zuführungsschlauch einzeln zugeführt werden. Im Grundkörper 16 ist eine Bohrung 44 angeordnet, die mit dem zweiten Pneumatikzylinder 18 in Verbindung steht und einen Druckstempel 46 führt, dessen unteres Ende in Ruhestellung die in Fig. 3 dargestellte Stellung einnimmt. Unterhalb des Druckstempels schließt sich ein im Querschnitt rechteckiger Führungskanal 48 an, der im unteren Teil seitlich von zwei über das Gehäuse vorstehenden Blechstreifen in Gestalt von Blattfedern 50 begrenzt ist, über die die ausgeworfenen Federn in ihr Federlager eingeführt werden. In den Führungskanal 48 mündet die Federkammer 40 bzw. die hierzu koaxial angeordnete Querbohrung 32. Ein Abdeckstück 52 (Fig. 4) ist das auf dem Grundkörper 16 aufgeschraubt.

Das Werkzeug arbeitet wie folgt:

Die über den nicht dargestellten Zuführungsschlauch dem Zuführungskanal 42 pneumatisch zugeführten Druckschraubenfedern werden vereinzelt der Federkammer 40 zugeführt, die axial auf den Druckbolzen 34 ausgerichtet ist. Durch Druckaufbau im Zylinder 14 wird die Schieberplatte 26 nach unten gedrückt, wodurch über den Schlitz 38 und den Lagerbolzen 36 der Druckbolzen 34 nach links verschoben wird, so daß die in der Federkammer 40 befindliche entspannte Feder nach links in den Führungskanal 48 eingeschoben und soweit zusammengepreßt wird, daß sie im Querschnitt des Führungskanals 48 zu liegen kommt.

Danach wird durch Druckaufbau im Zylinder 18 der Druckstempel 46 nach unten gedrückt, der die zusammengepreßte Feder im Führungskanal 48 nach unten und dann zwischen die aus dem Gehäuse frei vorstehenden Blattfederenden verschiebt, von denen die Feder im zusammengepreßten vorgespannten Zustand in das ihr zugeordnete Federlager ausgeworfen wird. Durch Umsteuerung der Druckzuführung nach erstem und zweitem pneumatischen Zylinder wird der Druckstempel 46 angehoben und die Schieberplatte 26 nach oben gedrückt, wodurch der Druckbolzen 34 wieder in seine Ausgangslage zurückkehrt und eine neue Feder in die Federkammer eingesetzt werden kann.

Die Auslösung der Steuerung für das Montagewerkzeug erfolgt elektrisch über einen Hand- oder Fußtaster. Dabei beträgt die Zeitspanne vom Betätigen des Tasters (Feder spannen und ausschieben) bis zur erneuten Startbereitschaft ca. 0,9 Sekunden. In dieser Zeit erfolgt die Vereinzelung und Zuführung der nächsten Feder und die Anordnung des Montagewerkzeugs wird am nächsten Federlager angesetzt.

Die Dimensionen der Zuführungskanäle und die entsprechenden Schieberorgane müssen auf die Dimensionen der jeweils verwendeten Federn abgestimmt sein.

Die beim Ausführungsbeispiel als Blattfedern ausgebildeten Führungsstreifen 50 können auch entfallen, und der Führungskanal 48 kann in diesem Falle in verjüngter verlängerter Form in das Federlager in Form eines geschlossenen Schachtes eingeführt werden.

### Bezugszeichenliste

- 10: Abdeckung
- 12: Winkelstück
- 14: 1. pneumatischer Zylinder
- 16: Grundkörper
- 18: 2. pneumatischer Zylinder
- 20: Schieberlager
- 22: Befestigungsstück
- 24: Anschlußstück
- 26: Schieberplatten
- 28: Zwischenstück
- 30: Kolbenstange
- 32: Querbohrung
- 34: Druckbolzen
- 36: Lagerbolzen
- 38: Schlitz
- 40: Federkammer
- 42: Zuführungskanal
- 44: Bohrung
- 46: Druckstempel
- 48: Führungskanal
- 50: Blattfedern
- 52: Abdeckstück

## Patentansprüche

1. Montagewerkzeug zum Einsatz von vorgespannten Druckschraubenfedern in das ihnen zugeordnete Federlager, insbesondere zur Anwendung für Tastenschalter in der Elektroindustrie oder in der Feinwerktechnik, welches einen Führungskanal (48) und einen darin verschiebbaren Druckstempel (46) aufweist und bei dem der Druckstempel (46) die im Führungskanal (48) befindliche, zusammengedrückte Feder in das Federlager herausschiebt,
gekennzeichnet durch die folgenden Merkmale:
- eine Federkammer (40) dient zur Aufnahme einer vereinzelten Druckschraubenfeder;
- ein Druckbolzen (34) ist axial in einer Querbohrung (32) geführt und auf die in der Federkammer (40) liegende Druckschraubenfeder ausgerichtet;
- die Federkammer (40) mündet in dem quer hierzu verlaufenden Führungskanal (48), in dem der Druckstempel (46) läuft;
- der Druckbolzen (34) drückt die in der Federkammer liegende Druckschraubenfeder in den Führungskanal (48).

2. Montagewerkzeug nach Anspruch 1,
dadurch gekennzeichnet, daß in dem Führungskanal (48) zwei gegenüberliegend angeordnete Blechstreifen (50) angeordnet sind, die über die untere Ausgabeöffnung des Führungskanals (48) vorstehen und die vorgespannte Feder zwischen sich führen.

3. Montagewerkzeug nach Anspruch 2,
dadurch gekennzeichnet, daß die Blechstreifen (50) als Blattfedern ausgebildet sind.

4. Montagewerkzeug nach Anspruch 1,
dadurch gekennzeichnet, daß in die Federkammer (40) ein schräg zur Querbohrung (32) verlaufender Zuführungskanal (42) einmündet, an dessen Anschlußstück (24) ein Federzuführungsschlauch ansetzbar ist.

5. Montagewerkzeug nach Anspruch 1,
dadurch gekennzeichnet, daß der in der Querbohrung (32) verschiebbare Druckbolzen (34) einen quer eingesetzten Lagerbolzen (36) aufweist, der in zwei schräg verlaufenden Schlitzen (38) zweier Schieberplatten (26) eingreift, die pneumatisch in einem Schieberlager verschiebbar sind.

6. Montagewerkzeug nach einem der vorhergehenden Ansprüche,
dadurch gekennzeichnet, daß die Schaltventile für den pneumatischen Antrieb elektrisch betätigbar sind.

7. Montagewerkzeug nach einem der vorhergehenden Ansprüche,
dadurch gekennzeichnet, daß die verschiedenen Funktionsteile mittels Abdeckungen (10) verkleidet sind.

8. Montagewerkzeug nach den Ansprüchen 1 - 7,
dadurch gekennzeichnet, daß das Werkzeug handgeführt ist.

9. Montagewerkzeug nach den Ansprüchen 1 - 7,
dadurch gekennzeichnet, daß es in einen Automaten eingebaut ist.

## Claims

1. Fitting tool for inserting pretensioned spiral compression springs in the spring support allocated to them, particularly for use for push-button switches in the electrical industry or in precision engineering, which tool has a guide conduit (48) and a pressure ram (46) capable of displacement therein, and in which tool the pressure ram (46) thrusts out into the spring support the compressed spring located in the guide conduit (48), characterised by the following features:
- a spring chamber (40) serves to receive a separated spiral compression spring;
- a thrust bolt (34) is axially guided in a transverse bore (32) and aligned with the spiral compression spring located in the spring chamber (40);
- the spring chamber (40) opens out into the guide conduit (48) which extends transversely thereto and in which the pressure ram (46) runs;
- the thrust bolt (34) presses the spiral compression spring located in the spring chamber into the guide conduit (48).

2. Fitting tool according to claim 1,
characterised in that there are arranged in the guide conduit (48) two sheet-metal strips (50) which are arranged in an opposed manner and which protrude beyond the lower discharge aperture of the guide conduit (48) and guide the pretensioned springs between them.

3. Fitting tool according to claim 2,
characterised in that the sheet-metal strips (50) are constructed as leaf springs.

4. Fitting tool according to claim 1,
characterised in that there opens into the spring chamber (40) a supply conduit (42) which extends obliquely to the transverse bore (32) and to the connection piece (24) of which a spring supply hose can be attached.

5. Fitting tool according to claim 1,
characterised in that the thrust bolt (34) which is displaceable in the transverse bore (32) has a transversely inserted support bolt (36) which engages in two obliquely extending slots (38) in two slide plates (26) which can be displaced pneumatically in a slide support.

6. Fitting tool according to one of the preceding claims, characterised in that the switching valves for the pneumatic drive can be actuated electrically.

7. Fitting tool according to one of the preceding claims, characterised in that the various functioning parts are masked by means of covers (10)

8. Fitting tool according to claims 1 to 7,
characterised in that the tool is guided manually.

9. Fitting tool according to claims 1 to 7,
characterised in that it is incorporated in an automatic machine.

## Revendications

1. Outil pour le montage de ressorts hélicoïdaux de compression précontraints dans le logement associé, notamment pour l'utilisation en relation avec des interrupteurs à touche dans l'industrie de l'équipement électrique ou dans l'industrie de la mécanique de précision, comportant un canal de guidage (48) et un piston (46) coulissant dans celui-ci, dans lequel le piston (46) repousse dans le logement le ressort comprimé présent dans le canal de guidage (48),
caractérisé par les caractéristiques suivantes:
- une chambre à ressort (40) reçoit un ressort hélicoïdal isolé;
- une tige de compression (34) est guidée axialement dans un trou transversal (32) et est orientée en direction du ressort hélicoïdal de compression présent dans la chambre à ressort (40);
- la chambre à ressort (40) débouche dans le canal de guidage (48) qui lui est perpendiculaire et dans lequel se déplace le piston (46);
- la tige de compression (34) repousse dans le canal de guidage (48) le ressort hélicoïdal de compression présent dans la chambre à ressort.

2. Outil de montage selon la revendication 1, caractérisé par le fait que deux bandes de tôle (50) sont disposées en vis-à-vis dans le canal de guidage (48), lesquelles bandes de tôle font saillie au-delà de l'orifice inférieur de sortie du canal de guidage (48) et guident entre elles le ressort précontraint.

3. Outil de montage selon la revendication 2, caractérisé par le fait que les bandes de tôle (50) sont agencées sous forme de ressorts à lame.

4. Outil de montage selon la revendication 1, caractérisé par le fait qu'un canal d'alimentation (42) qui est incliné par rapport au trou transversal (32) et au raccord (24) duquel est connectée une conduite souple d'amenée des ressorts débouche dans la chambre à ressort (40).

5. Outil de montage selon la revendication 1, caractérisé par le fait que la tige de compression (34) coulissant dans le trou transversal (32) comporte un axe (36) transversal qui s'engage dans deux fentes (38) inclinées de deux plaques (26) coulissantes qui peuvent être déplacées par voie pneumatique dans un support-guide.

6. Outil de montage selon l'une des revendications précédentes, caractérisé par le fait que les soupapes de commande pour l'entraînement pneumatique sont actionnées électriquement.

7. Outil de montage selon l'une des revendications précédentes, caractérisé par le fait que les différents éléments fonctionnels sont habillés au moyen de capots (10).

8. Outil de montage selon les revendications 1 - 7, caractérisé par le fait que l'outil est actionné manuellement.

9. Outil de montage selon les revendications 1 - 7, caractérisé par le fait qu'il est monté dans une machine automatique.
